# EUROPÄISCHE PATENTSCHRIFT

(11) **EP 1 378 048 B1**
(45) Veröffentlichungstag und Bekanntmachung des Hinweises auf die Patenterteilung: **31.12.2008**
(21) Anmeldenummer: 02732362.5
(22) Anmeldetag: 30.03.2002
(51) Int. Cl.: H02M 1/12

(54) **VERFAHREN ZUR VERRINGERUNG VON STÖRABSTRAHLUNGEN BEI EINEM DC/DC-SPERRWANDLER**
METHOD FOR REDUCING INTERFERENCE EMISSIONS IN A DC/DC FLYBACK CONVERTER
PROCEDE DE REDUCTION DE RAYONNEMENTS PARASITES DANS UN CONVERTISSEUR DC/DC A OSCILLATEUR BLOQUE

(30) Priorität: 04.04.2001 DE 10116725
(43) Veröffentlichungstag der Anmeldung: 07.01.2004
(73) Patentinhaber: ROBERT BOSCH GMBH, 70442 Stuttgart (DE)
(72) Erfinder: WESTENWELLER, Axel, 89081 Ulm (DE)
(86) Internationale Anmeldenummer: PCT/DE2002/001165
(87) Internationale Veröffentlichungsnummer: WO 2002/082625

(56) Entgegenhaltungen:
- GB-A- 2 232 835
- US-A- 5 510 698
- VILATHGAMUWA M ET AL: "EMI SUPPRESSION WITH SWITCHING FREQUENCY MODULATED DC-DC CONVERTERS" IEEE INDUSTRY APPLICATIONS MAGAZINE, IEEE CENTER, US, Bd. 5, Nr. 6, November 1999 (1999-11), Seiten 27-33, XP000935947 ISSN: 1077-2618
- SIMONETTI D S L ET AL: "Control conditions to improve conducted EMI by switching frequency modulation of basic discontinuous PWM preregulators" POWER ELECTRONICS SPECIALISTS CONFERENCE, PESC '94 RECORD., 25TH ANNUAL IEEE TAIPEI, TAIWAN 20-25 JUNE 1994, NEW YORK, NY, USA,IEEE, 20. Juni 1994 (1994-06-20), Seiten 1180-1187, XP010121366 ISBN: 0-7803-1859-5
- PATENT ABSTRACTS OF JAPAN vol. 2000, no. 11, 3. Januar 2001 (2001-01-03) & JP 2000 236660 A (TOYOTA AUTOM LOOM WORKS LTD), 29. August 2000 (2000-08-29)

## Beschreibung

### Stand der Technik

Die Erfindung geht aus von einem Verfahren zur Verringerung von bei dem Störabstrahlungen bei einem DC/DC-Sperrwandler, nach Gattung des Hauptanspruchs, bei dem durch eine Folge von Pumpvorgängen eine eingespeiste Gleichspannung erhöht wird.

Schaltungen mit einem Sperrwandler zur Erhöhung einer eingespeisten Gleichspannung sind schon vielfältig bekannt. Bei einem derartigen Sperrwandler wird eine Speicherdrossel über einen Schalter bis zum Erreichen einer Stromabschaltschwelle aufgeladen. Nach Öffnen des Schalters wird die in der Speicherdrossel enthaltene Energie auf einen Speicherkondensator so lange umgeladen, bis der Strom in der Speicherdrossel auf das Niveau der Einschaltschwelle abgesunken ist. Dieses als Pumpvorgang bezeichnete Hochsetzen der Gleichspannung wird wiederholt so lange fortgesetzt, bis der Speicherkondensator auf eine vorgegebene Spannung aufgeladen ist.

Die Ausgangsspannung des DC/DC-Sperrwandlers ist stabil, wenn die minimal zulässige Zeit zwischen zwei aufeinanderfolgenden Energieentnahmen am Ausgang des Sperrwandlers stets größer ist als die maximal mögliche Nachladezeit, die für das Ersetzen der entnommenen Energie erforderlich ist (Stabilitätsbedingung für die Ausgangsspannung des Sperrwandlers).

Bei diesem Verfahren hat sich als nachteilig herausgestellt, dass durch die vorgegebenen festen Schaltschwelle für das Ein- und Abschalten des Stromes in der Speicherdrossel ein dreieckförmiger Stromverlauf mit nahezu konstanter Frequenz entsteht. Nach der geltenden Theorie enthält das dreieckförmige Stromsignal bei einer Fourier-Analyse neben der Grundschwingung auch Oberwellen, die spektral in diskreten Frequenzen abgestrahlt werden und unerwünschte Störabstrahlungen erzeugen. Mit bisherigen Techniken können die unerwünschten Störabstrahlungen beispielsweise mit Entstörfiltern (L/C-Filter) gedämpft werden, um vorgegebene Störabstrahlgrenzwerte zu erreichen. Diese Entstörfilter haben jedoch relativ große Werte, so dass sie einerseits von ihrer Bauform und andererseits von den Kosten her aufwendig sind.

Aus der Druckschrift VILATHGAMUWA M ET AL: "EMI SUPPRESSION WITH SWITCHING FREQUENCY MODULATED CD-DC CONVERTERS » IEEE INDUSTRY APPLICATIONS MAGAZINE, IEEE CENTER, US, Bd. 5, Nr. 6, November 1999 (1999-11), Seiten 27-33, XP000935947 ISSN: 1077-2618D1 sind Gleichspannungswandler bekannt, deren Schaltfrequenz moduliert ist. Dadurch sollen die elektromagnetischen Abstrahlungen reduziert werden. Eine "Verwürfelung" der Schaltwellen ist jedoch nicht bekannt.

Aus der Druckschrift SIMONETTI D S L ET AL:"Control conditions to improve conducted EMI by switching frequency modulation of basic discontinuous PWM preregulators" POWER ELECTRONICS SPECIALISTS CONFERENCE, PESC '94 RECORD., 25TH ANNUAL IEEE TAIPEI, TAIWAN 20-25 JUNE 1994, NEW YORK, NY, USA, IEEE, 20. Juni 1994 (1994-06-20), Seiten 1180-1187, XP010121366 ISBN: 0-7803-1859-5 sind Spannungswandler bekannt, die mit variabler Schaltfrequenz betrieben werden. Umschaltvorgänge bei unterschiedlichen Stromschwellen werden nicht erwähnt.

Aus der GB-A-2 232 835 sind Vorrichtungen und Verfahren zur Regelung von Elektromotoren bekannt. Zur Verringerung des akustischen Geräuschs, das vom Regler verursacht wird, wird die Frequenz und die Amplitude des Ausgangs eines Oszillators, der Bestandteil der Regelung ist, verändert. Ein Zusammenhang mit Gleichspannungswandlern wird nicht erwähnt.

### Vorteile der Erfindung

Das erfindungsgemäße Verfahren zur Verringerung von Störabstrahlungen bei einem DC/DC-Sperrwandler mit den kennzeichnenden Merkmalen des Hauptanspruchs hat dagegen den Vorteil, dass allein durch die Änderung der Stromabschalt- und/oder der Stromeinschaltschwelle nach jedem Pumpvorgang die Störabstrahlung bereits reduziert werden kann. Dadurch können vorgegebene Grenzwerte für die Störabstrahlung in besonders vorteilhafter Weise besser eingehalten werden.

Durch die in den abhängigen Ansprüchen aufgeführten Maßnahmen sind vorteilhafte Weiterbildungen und Verbesserungen des im Hauptanspruch angegebenen Verfahrens möglich. Als besonders vorteilhaft wird angesehen, dass unter Einhaltung der Stabilitätsbedingung sowohl die Dauer als auch die Stromhübe der einzelnen Pumpvorgänge quasi statistisch verteilt werden. Hierdurch wird die starre Schaltfrequenz aufgelöst, so dass sich die in den diskreten Frequenzen der Grund- und Oberschwingungen enthaltene Energie auf ein breiteres Frequenzband verteilt. Dies gilt unter der Voraussetzung, dass die Anstiegs-und die Abstiegsgeschwindigkeit des Stromes in der Speicherdroddel quasi konstant sind. Die Änderung der Schaltfrequenz, die auch als momentane Pumpfrequenz bezeichnet werden kann, erfolgt durch geeignet gewählte sequenzen verschieden hoher Ein- und Abschaltschwellen für den Ladestrom in der Speicherdrossel.

Bei einer reinen Unterkantenverwürfelung ergibt sich bei gleichen Randbedingungen (gleiche Versorgungsspannung, gleiche Sättigungseigenschaften der Speicherdrossel, etc) für quasi alle möglichen Sequenzen von Einschaltschwellen, eine Nachladezeit, die stets kleiner ist als die Nachladezeit, die sich bei einem fest vorgegebenen unteren Einschaltstromniveau ohne Stromverwürfelung ergeben würde. Durch diese Maßnahme wird vorteilhaft die Störabstrahlung verringert.

Um eine weitere Verringerung der Störabstrahlung zu erreichen, genügt ein kleineres Entstörfilter, als es für den nicht verwürfelten Fall nötig wäre, um vorgegebene Grenzwerte zu unterschreiten.

Um den Ladevorgang des Speicherkondensators mit der Stromverwürfelung zu steuern, wird vorteilhaft ein Messwiderstand vorgesehen, über den der momentane Stromfluss erfasst und durch eine entsprechende Steuerschaltung gesteuert werden kann. Insbesondere kann mit Hilfe eines Komparators mit einer Hysteresekennlinie die Schwingneigung der Schaltungsanordnung unterdrückt werden.

Günstig ist auch die Verwendung eines MOS-FET-Transistors als Schalter, da diese Transistortypen marktgängig sind und Ströme ohne großen Leistungsverlust schnell schalten können. Die erfindungsgemäßen Verfahren lassen sich in vorteilhafter Weise mit einer Vorrichtung bzw. einer Schaltungsanordnung durchführen, die einen DC-DC-Sperrwandler umfasst.

Ein bevorzugte Anwendung wird in einem elektrischen Bordnetz eines Kraftfahrzeuges gesehen, weil unerwünschte Oberwellen leicht zu Störungen in der komplexen Elektronik führen könnten.

### Zeichnung

Ein Ausführungsbeispiel der Erfindung ist in der Zeichnung dargestellt und wird in der Beschreibung näher erläutert.

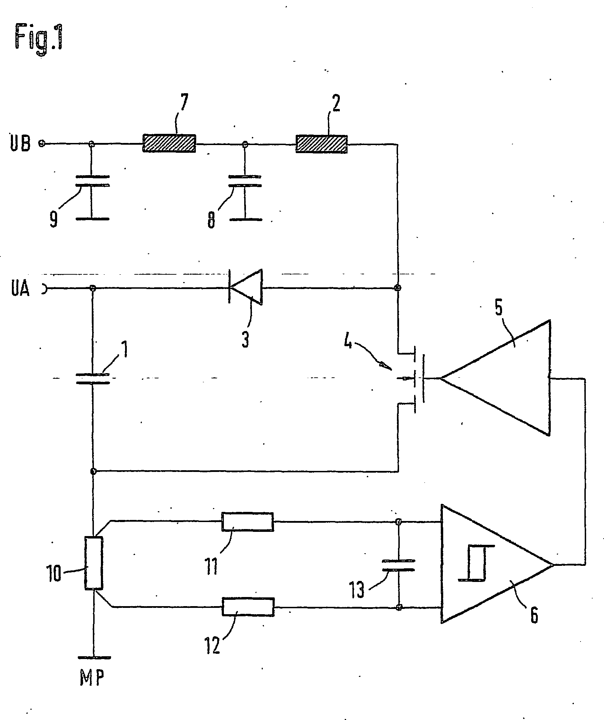

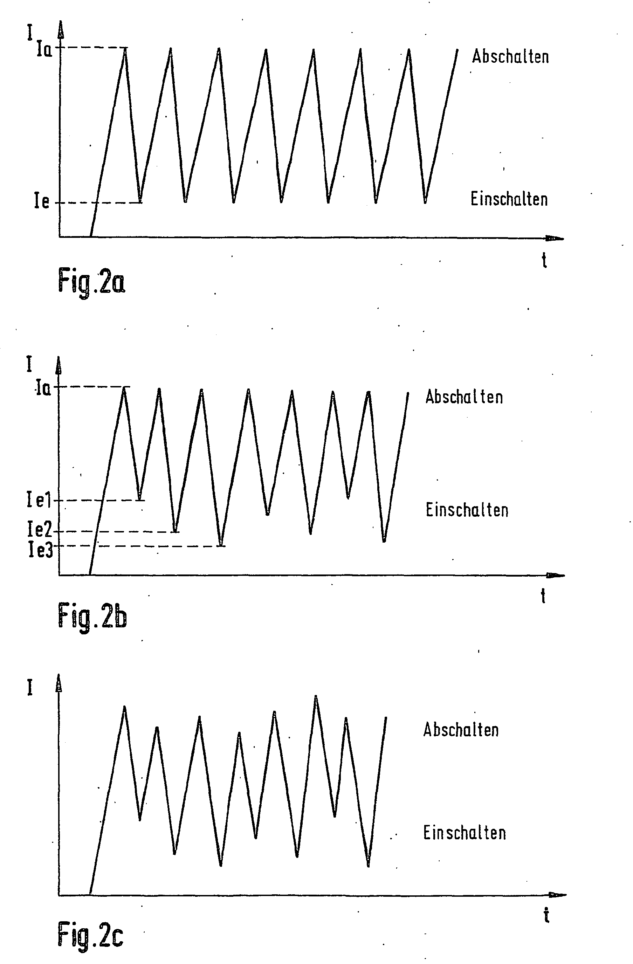

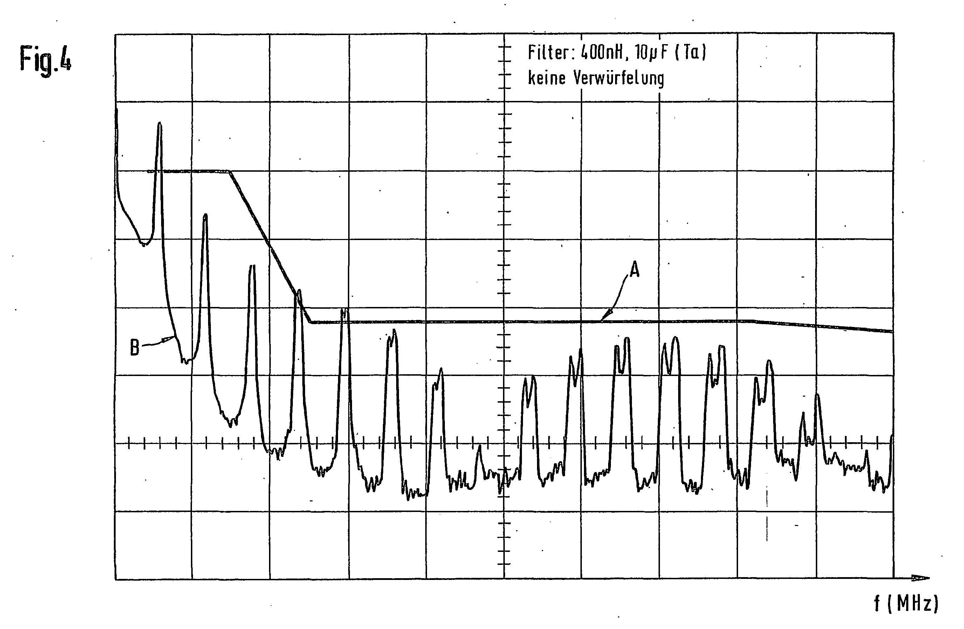

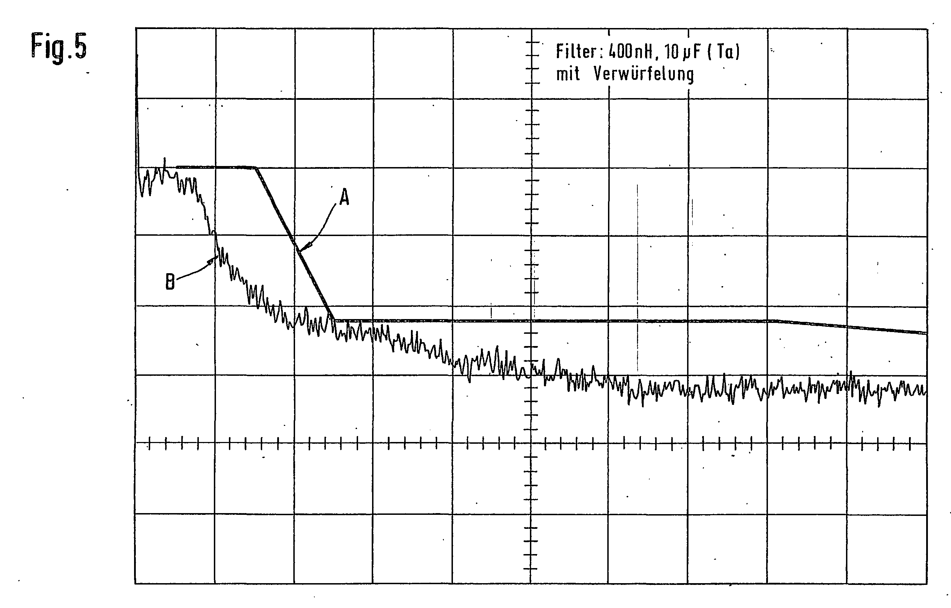

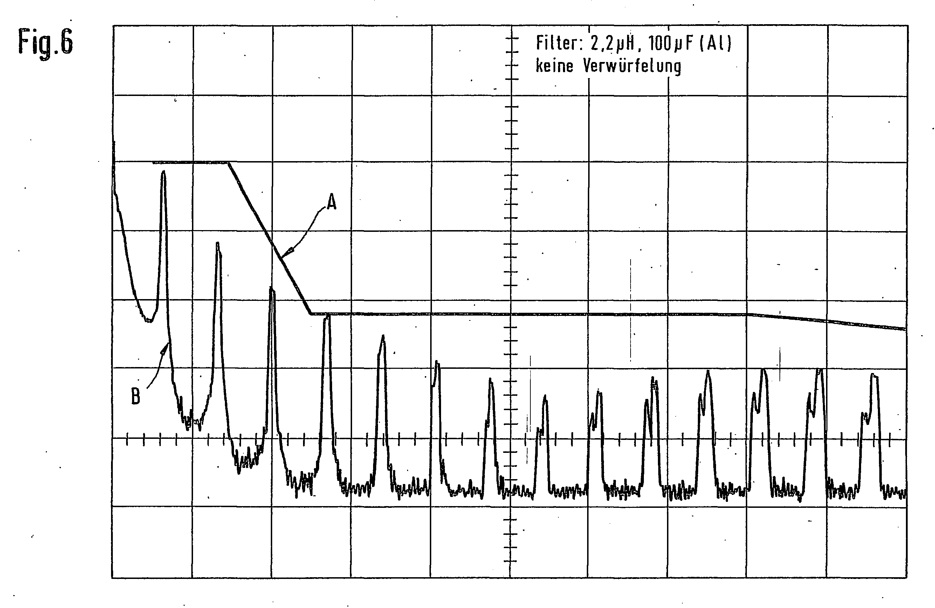

Figur 1 zeigt einen Stromlaufplan für einen Sperrwandler, die Figuren 2a bis 2c zeigen Diagramme mit typischen Stromverläufen ohne Stromverwürfelung, mit einer Unterkantenstromverwürfelung und die Verwürfelung der Einschalt- und Abschaltstromniveaus, Figur 4 zeigt den Frequenzverlauf ohne Stromverwürfelung, aber mit einem herkömmlichen Filter, Figur 5 zeigt ein Ausführungsbeispiel mit kleinem Filter und Figur 6 zeigt einen Frequenzverlauf mit einem großen Filter ohne Stromverwürfelung.

### Beschreibung des Ausführungsbeispiels

Zunächst wird in Figur 1 anhand eines Stromlaufplans die Funktionsweise eines DC/DC-Sperrwandlers näher erläutert. Eine Gleichspannungsquelle, vorzugsweise eine Batterie UB ist über eine Filterspule 7 mit einer Speicherdrossel 2, einer in Flussrichtung geschalteten Diode 3 und einem Speicherkondensator 1 über einen Messwiderstand 10 gegen Masse geschaltet. Der Massepunkt ist mit dem Massepunkt der Batterie verbunden. Am Speicherkondensator 1 kann zwischen der Klemme UA und dem Massepunkt MP die hochgesetzte Gleichspannung abgegriffen werden. Parallel zur Diode 3 und dem Speicherkondensator 1 ist der Leistungspfad eines Schalttransistors 4 geschaltet, der beispielsweise als MOS-FET-Transistor oder dergleichen ausgebildet ist. Der Schalttransistor 4 wird von einer Steuerschaltung 5 angesteuert, die ihrerseits von dem Spannungsabfall am Messwiderstand 10 gesteuert wird. Es ist vorgesehen, den Spannungsabfall am Messwiderstand 10 über zwei Vorwiderstände 11, 12 und einen Komparator 6 mit einer Hysterese zu erfassen. Zwischen den beiden Eingängen des Komparators 6 ist ein Entstörkondensator 13 vorgesehen. Des Weiteren ist an der Batterieklemme UB ein Filterkondensator 9 gegen Masse geschaltet. Auch ist zwischen der Filterspule 7 und der Speicherdrossel 2 ein Stützkondensator 8 gegen Masse geschaltet.

Die Steuerschaltung 5 enthält eine Elektronik, welche Sequenzen von Einschalt- und Abschaltstromschwellen derart erzeugt, dass sich unterschiedlich Zeitdauern und Stromhübe für die einzelnen Pumpvorgänge ergeben. Die Stromschwellen sind so gewählt, dass unter Einhaltung der Stabilitätsbedingung im Frequenzverlauf des Stromsignals keine diskreten Frequenzen entstehen.

Anhand der Figuren 2 bis 6 wird die Funktionsweise dieser Anordnung näher erläutert. Die Figuren 2a, 2b und 2c zeigen unterschiedliche Diagramme mit Stromverläufen. Figur 2a zeigt den Stromverlauf eines standardgemäßen DC/DC-Sperrwandlers. Für diesen Stromverlauf ist typisch, dass sowohl das Einschaltstromniveau Ie als auch das Abschaltstromniveau Ia bei jedem Pumpvorgang gleich hoch ist. Dadurch ergeben sich für jeden Pumpvorgang nahezu gleiche Ladezeiten für den Speicherkondensator 1 bzw. eine konstante Schaltfrequenz. Aufgrund dieser Stromkurve ergeben sich relativ hohe und schmalbandige Abstrahlpegel, die sich über ein breites Frequenzband verteilen und die in einem Bordnetz unerwünschte Störungen verursachen können.

In Figur 2b wird dagegen ein Diagramm mit einem Stromverlauf dargestellt, bei dem zwar das Abschaltstromniveau Ia konstant gehalten wird, nicht dagegen das Einschaltstromniveau. Dieses wird als Stromniveauverwürfelung, in diesem Fall als Unterkantenverwürfelung bezeichnet. Durch die Verwürfelung der Unterkante ergeben sich beispielsweise die unterschiedlichen Einschaltstromniveaus Ie1, Ie2, Ie3 usw. Typisch für diesen Stromverlauf ist, dass bei der reinen Unterkantenverwürfelung die Energie aus der Speicherdrossel 2 stets von einem gleichbleibend hohen Abschaltstromniveau Ia auf den Speicherkondensator 1 umgeladen wird. Der Sperrwandler wird aus dem verwürfelten Einschaltstromniveau eingeschaltet. Damit die Nachladezeit einen vorgegebenen Maximalwert nicht überschreitet, werden die Einschaltstromniveaus Ie1...Ie3 nur in dem Strombereich verwürfelt, der beispielsweise auch bei festgehaltenem Einschaltstromniveau Ie1...Ie3 die maximale Nachladezeit einhält.

Figur 2c zeigt einen alternativen Stromverlauf, bei dem sowohl die Unter- als auch die Oberkante verwürfelt wurde. In alternativer Ausgestaltung ist auch vorgesehen, eine reine Oberkantenverwürfelung zu verwenden.

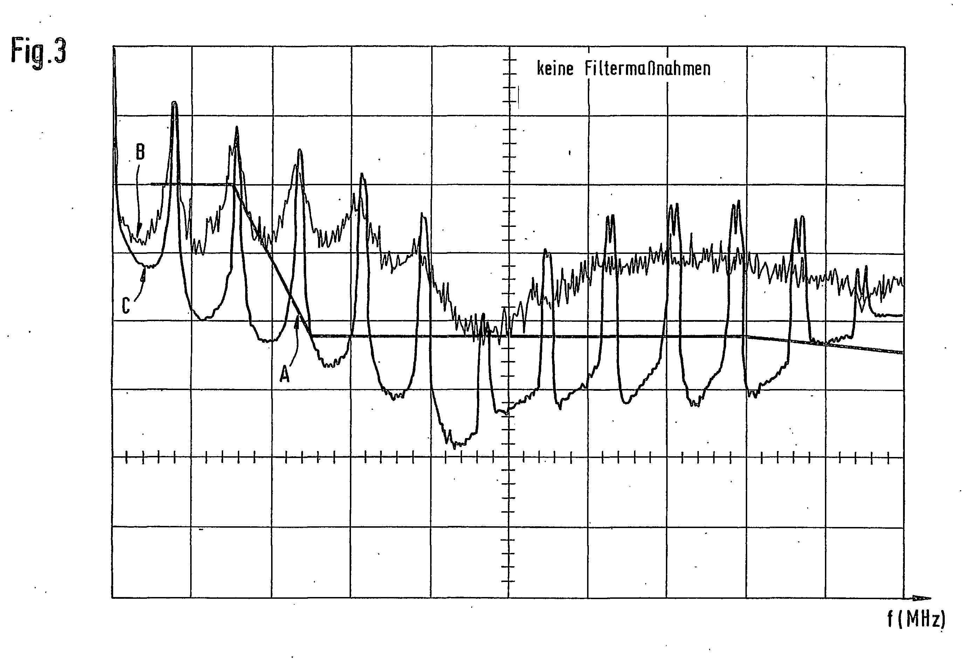

Die tatsächliche Störabstrahlung bei Einsatz des DC/DC-Sperrwandlers in einem geeigneten Stromnetz, beispielsweise einem Kraftfahrzeugstromnetz, kann mit einem Oszilloskop oder einem Frequenzanalyser gemessen werden. Zur näheren Erläuterung der Wirkungsweise der Erfindung wurden in den Figuren 3 bis 6 unterschiedliche Messkurven für verschiedene Versuchsanordnungen dargestellt. Als geeignetes Stromnetz wurde beispielsweise das Stromnetz eines Kraftfahrzeugs nachgebildet und die Spektralkurven im Mittelwellenbereich mit den Frequenzen 0,525 bis 1,605 MHz (Kurve B) bzw. im LW-Bereich mit Frequenzen von 0,150 bis 0,285 MHz dargestellt (Kurve C). Des Weiteren wurde die Kurve A eingetragen, die eine vorgegebene Grenzwertkurve für die Störabstrahlung simulieren soll.

Die Kurven der Figur 3 entsprechen dem Diagramm des Stromverlaufes gemäß der Figur 2b, bei dem eine Unterkantenverwürfelung für die Einschaltschwellen Ie1...Ie3 vorliegt. Grundlage für den Sperrwandler ist die Schaltung nach Figur 1c, bei der außer einem Stützkondensator 8 keine weiteren LC-Filter verwendet wurden. Den beiden Kurven B und C ist entnehmbar, dass bei den vorgegebenen Versuchsbedingungen zwar eine gewisse Reduzierung der Störabstrahlung erreicht wird, sie liegt jedoch noch teilweise oberhalb des vorgegebenen Grenzwertkurve A. Anzumerken ist auch, dass die Nachladezeit bei diesem Versuch nicht die maximale Nachladezeit überschreitet, die sich bei kleinstem festgehaltenen Einschaltstromniveau ergibt.

Figur 4 zeigt im Vergleich dazu das Frequenzspektrum bei einem Sperrwandler, bei dem anstelle der Verwürfelung ein LC-Filter (Position 7,9) verwendet wurde. Diese Maßnahme reicht jeddoch nicht aus, da die Störabstrahlwerte relativ hoch sind und im unteren Frequenzbereich der Kurve B der vorgegebene Grenzwert der Kurve A überschritten wird.

Eine erfindungsgemäße und sehr wirkungsvolle Lösung des Abstrahlproblems zeigt dagegen Figur 5. Hier wurde sowohl das Ein- als auch das Abschaltstromniveau verwürfelt und zusätzlich noch das zuvor genannte LC-Filter 7,9 gemäß der Figur 4 verwendet. Hier wurden sogar im unteren AM-Bereich die Abstrahlgrenzwerte eingehalten und selbst die Grundschwingung wurde aufgelöst.

In alternativer Ausgestaltung der Erfindung ist vorgesehen, die alleinige Verwürfelung der Einschaltstromniveaus durchzuführen und gegebenenfalls mit einem Filter zu kombinieren. Die Stromhübe führen zu einem ähnlichen Ergebnis, da der Grad der spektralen Spreizung wesentlich von der Dauer der einzelnen Pumpvorgänge abhängt.

Figur 6 zeigt zum Vergleich das Frequenzspektrum bei einem bekannten Sperrwandler, mit festen Einschalt- und Abschaltstromniveaus. Im Vergleich zum in Figur 5 dargestellten Verfahren war die eingesetzte LC-Filterkombination 7,9 hinsichtlich des erforderlichen Kapazitätswertes um den Faktor 5 und hinsichtlich des Induktivitätswerts um den Faktor 10 größer bemessen. Zwar wurden auch hier die vorgegebenen Grenzwerte der Kurve A eingehalten; die Werte für die Induktivität und Kapazität sind jedoch sehr groß und können beispielsweise das gesamte Bordnetz negativ beeinflussen. Dieser Nachteil ist bei dem erfindungsgemäßen Ausführungsbeispiel der Erfindung gemäß der Figur 5 nicht gegeben, da mit einem wesentlich kleiner dimensionierten LC-Filter gearbeitet wird. Den einzelnen Ausführungsformen.ist gemeinsam, dass Mittel vorhanden sind, die die Umschaltung bzw. die Schaltvorgänge bei unterschiedlichen Strömen oder Zeiten bewirken.

Wesentlich für das Funktionieren der erfindungsgemäßen Verfahren ist die Einhaltung der genannten Bedingungen an die Nachladezeit, die die Stabilität der Ausgangsspannung gewährleisten. Ein wiederholt auftretendes "pendeln" der Nachladezeit über die maximal zulässige Nachladezeit hinaus würde zum Zusammenbrechen der Ausgangsspannung führen, da die Ladebilanz für den Speicherkondensator und damit die Stabilitätsbedingung für die Ausgangsspannung nicht mehr erfüllt wäre.

Da Sequenzen von Einschalt- und Abschaltstromschwellen existieren, die zum Verschwinden diskreter Frequenzen führen, jedoch die Stabilitätsbedingungen nicht erfüllen, muß dafür gesorgt werden, dass in der Steuerschaltung nur solche Sequenzen von Einschalt- und Abschaltstromschwellen generiert werden, die zum einen keine diskreten Frequenzen im Spektrum des Stromsignales erzeugen und die zum anderen -bei Belastung des Sperrwandlers die Stabilitätsbedingunge erfüllen und eine stabile Ausgangsspannung gewährleisten.

Bei einer reinen Unterkantenverwürfelung erfüllt bei sonst gleichen Randbedingungen, also gleiche Versorgungsspannung, gleiche Sättigungseigenschaften der Speicherdrossel usw. quasi jede mögliche Sequenz von Einschaltstromschwellen, die zum Verschwinden diskreter Frequenzen im Stromspektrum führt, auch die Stabilitätsbedingung. Sofern die Steuerschaltung bei jedem Nachladevorgang identische, geeignet gewählte Sequenzen für die Einschalt- und Abschaltstromschwellen wiederholt, ergibt sich bei sonst konstanten Bedingungen eine konstante Nachladezeit und ein zeitliches "pendeln" findet bei dieser Ausgestaltung nicht statt.

## Patentansprüche

1. Verfahren zur Verringerung von Störabstrahlungen bei einem DC/DC-Sperrwandler, bei dem durch eine Folge von Pumpvorgängen eine Ausgangsspannung mit einem vorgegebenen Wert erzeugt wird, wobei ein Ladestrom von einer Gleichspannungsquelle (UB) mittels eines eingeschalteten Schalters (4) eine Speicherdrossel (2) bis zum Erreichen einer Stromabschaltschwelle auflädt und nach dem Sperren des Schalters (4) die in der Speicherdrossel gespeicherte Energie in einen Speicherkondensator (1) solange umgeladen wird, bis eine untere Stromeinschaltschwelle erreicht wird, unter Einhaltung von Stabilitätsbedingung für die Ausgangsspannung, die so zu wählen sind, dass die minimal zulässige Zeit zwischen zwei aufeinanderfolgenden Energieentnahmen am Ausgang des DC/DC-Sperrwandlers stets größer ist als eine maximal mögliche Nachladezeit, die für das Ersetzen der entnommenen Energie erforderlich ist, **dadurch gekennzeichnet, dass** die Stromeinschaltschwelle oder die Stromabschaltschwelle oder beide veränderbar sind und die Änderung der Stromschaltschwellen mittels Stromniveauverwürfelung erfolgt.

2. Verfahren zur Verringerung von Störabstrahlungen bei einem DC/DC-Sperrwandler nach Anspruch 1, **dadurch gekennzeichnet, dass** die Veränderung der Stromschaltschwellen durch Einsatz geeignet gewählter Sequenzen für die Einschalt- und/oder Abschaltschwellen erfolgt.

3. Verfahren zur Verringerung von Störabstrahlungen bei einem DC/DC-Sperrwandler nach Anspruch 1 oder 2, **dadurch gekennzeichnet dass** eine Filterung in einem Entstörfilter (7,9) erfolgt, wobei das Entstörfilter (7,9) mit kleineren Werten ausgebildet ist als bei einem DC/DC-Sperrwandler ohne Stromniveauverwürfelung.

4. Verfahren zur Verringerung von Störabstrahlungen bei einem DC/DC-Sperrwandler nach einem der vorhergehenden Ansprüche, **dadurch gekennzeichnet, dass** eine Spannungsmessung mittels eines Messwiderstand (10) erfolgt, der im Stromkreis des Speicherkondensators (1) und des Schalttransistors (4) liegt.

5. Verfahren zur Verringerung von Störabstrahlungen bei einem DC/DC-Spenwandler nach Anspruch 4, **dadurch gekennzeichnet, dass** der Schaltzustand des Schalttransistors (4) in Abhängigkeit vom Spannungsabfall am Messwiderstand (10) gesteuert wird.

6. Verfahren zur Verringerung von Störabstrahlungen bei einem DC/DC-Sperrwandler nach Anspruch 4 oder 5, **dadurch gekennzeichnet, dass** eine Messschaltung (5,6, 11 bis 13) den Spannungsabfall am Messwiderstand (10) erfasst und ein Steuersignal für den Schalttransistor (4) bildet.

7. Verfahren zur Verringerung von Störabstrahlungen bei einem DC/DC-Sperrwandler nach Anspruch 6, **dadurch gekennzeichnet, dass** eine Messschaltung (5,6, 11 bis 13) mit einen Komparator (6) mit einer Hysteresekennlinie eingesetzt wird.

8. Verfahren zur Verringerung von Störabstrahlungen bei einem DC/DC-Sperrwandler nach einem der vorhergehenden Ansprüche, **dadurch gekennzeichnet, dass** als Schalttransistor (4) ein MOS-FET-Transistor eingesetzt wird.

## Claims

1. Method for reducing radiated interference from a DC/DC flyback converter, in which an output voltage with a predetermined value is produced by a sequence of pumping processes, in which case a charging current from a DC voltage source (UB) charges, by means of a switched-on switch (4), a storage inductor (2) until a current switch-off threshold is reached, and after the switch (4) has been switched off, the energy stored in the storage inductor is discharged into a storage capacitor (1) until a lower current switch-on threshold is reached, while maintaining the stability condition for the output voltage, which thresholds can be chosen such that the minimum permissible time between two successive processes of drawing energy at the output of the DC/DC flyback converter are always greater than a maximum possible recharging time which is required to replace the energy drawn, **characterized in that** the current switch-on threshold or the current switch-off threshold or both is or are variable, and the current switching thresholds are varied by means of current level scrambling.

2. Method for reducing radiated interference from a DC/DC flyback converter according to Claim 1, **characterized in that** the current switching thresholds are varied by using suitably chosen sequences for the switch-on and/or switch-off thresholds.

3. Method for reducing radiated interference from a DC/DC flyback converter according to Claim 1 or 2, **characterized in that** filtering is carried out in a suppression filter (7, 9), with the suppression filter (7, 9) being designed to have lower values than in the case of a DC/DC flyback converter without current level scrambling.

4. Method for reducing radiated interference from a DC/DC flyback converter according to one of the preceding claims, **characterized in that** a voltage measurement is carried out by means of a measurement resistor (10) which is located in the circuit of the storage capacitor (1) and of the switching transistor (4).

5. Method for reducing radiated interference from a DC/DC flyback converter according to Claim 4, **characterized in that** the switching state of the switching transistor (4) is controlled as a function of the voltage drop across the measurement resistor (10).

6. Method for reducing radiated interference from a DC/DC flyback converter according to Claim 4 or 5, **characterized in that** a measurement circuit (5, 6, 11 to 13) detects the voltage drop across the measurement resistor (10), and forms a control signal for the switching transistor (4).

7. Method for reducing radiated interference from a DC/DC flyback converter according to Claim 6, **characterized in that** a measurement circuit (5, 6, 11 to 13) is used having a comparator (6) with a hysteresis characteristic.

8. Method for reducing radiated interference from a DC/DC flyback converter according to one of the preceding claims, **characterized in that** a MOSFET transistor is used as the switching transistor (4).

## Revendications

1. Procédé pour réduire les rayonnements parasites d'un convertisseur CC/CC à oscillateur bloqué, avec lequel une tension de sortie ayant une valeur prédéterminée est générée par une série d'opérations de pompage, un courant de charge provenant d'une source de tension continue (UB) chargeant une bobine accumulatrice (2) au moyen d'un commutateur (4) enclenché jusqu'à atteindre un seuil de coupure du courant et, après le blocage du commutateur (4), l'énergie électrique accumulée dans la bobine d'accumulation est transférée dans un condensateur d'accumulation (1) jusqu'à ce qu'un seuil inférieur d'activation du courant soit atteint, en maintenant des conditions de stabilité pour la tension de sortie, lesquelles doivent être choisies de telle sorte que la durée minimale admissible entre deux prélèvements d'énergie successifs à la sortie du convertisseur CC/CC à oscillateur bloqué soit toujours supérieure à une durée de recharge maximale possible qui est nécessaire pour remplacer l'énergie prélevée, **caractérisé en ce que** le seuil d'activation du courant ou le seuil de coupure du courant ou les deux peuvent être modifiés et la modification des seuils de commutation du courant s'effectue au moyen d'un hachage du niveau du courant.

2. Procédé pour réduire les rayonnements parasites d'un convertisseur CC/CC à oscillateur bloqué selon la revendication 1, **caractérisé en ce que** la modification des seuils de commutation du courant s'effectue en utilisant des séquences choisies de manière appropriée pour les seuils d'activation et/ou de coupure.

3. Procédé pour réduire les rayonnements parasites d'un convertisseur CC/CC à oscillateur bloqué selon la revendication 1 ou 2, **caractérisé en ce qu'**un filtrage est effectué dans un filtre antiparasite (7, 9), le filtre antiparasite (7, 9) étant configuré avec des valeurs plus petites que dans le cas d'un convertisseur CC/CC à oscillateur bloqué sans hachage du niveau de courant.

4. Procédé pour réduire les rayonnements parasites d'un convertisseur CC/CC à oscillateur bloqué selon l'une des revendications précédentes, **caractérisé en ce qu'**une mesure de tension est effectuée au moyen d'une résistance de mesure (10) qui se trouve dans le circuit électrique du condensateur d'accumulation (1) et du transistor de commutation (4).

5. Procédé pour réduire les rayonnements parasites d'un convertisseur CC/CC à oscillateur bloqué selon la revendication 4, **caractérisé en ce que** l'état de commutation du transistor de commutation (4) est commandé en fonction de la chute de tension aux bornes de la résistance de mesure (10).

6. Procédé pour réduire les rayonnements parasites d'un convertisseur CC/CC à oscillateur bloqué selon la revendication 4 ou 5, **caractérisé en ce qu'**un circuit de mesure (5, 6, 11 à 13) détecte la chute de tension aux bornes de la résistance de mesure (10) et forme un signal de commande pour le transistor de commutation (4).

7. Procédé pour réduire les rayonnements parasites d'un convertisseur CC/CC à oscillateur bloqué selon la revendication 6, **caractérisé en ce qu'**un circuit de mesure (5, 6, 11 à 13) comprenant un comparateur (6) ayant une courbe caractéristique à hystérésis est utilisé.

8. Procédé pour réduire les rayonnements parasites d'un convertisseur CC/CC à oscillateur bloqué selon l'une des revendications précédentes, **caractérisé en ce que** le transistor de commutation (4) utilisé est un transistor MOSFET.
